# FASCICULE DE BREVET EUROPEEN

(11) **EP 0 371 883 B1**
(45) Date de publication et mention de la délivrance du brevet: **27.04.1994**
(21) Numéro de dépôt: 89403334.9
(22) Date de dépôt: 30.11.1989
(51) Int. Cl.: H01M 8/22, H01M 12/04, H01M 4/66

(54) **Dispositif de conversion électrochimique utilisant une électrode rechargeable mécaniquement**
Vorrichtung für die elektrochemische Umwandlung unter Verwendung einer mechanisch wiederaufladbaren Elektrode
Electrochemical conversion device using a mechanically rechargeable electrode

(30) Priorité: 30.11.1988 FR 8815703
(43) Date de publication de la demande: 06.06.1990
(73) Titulaire: SORAPEC Société de Recherche et d'Applications Electrochimiques, F-94120 Fontenay-sous-Bois (FR)
(72) Inventeur: Bronoel, Guy, F-78000 Versailles (FR); Tassin, Noelle, F-94120 Fontenay-sous-Bois (FR)
(74) Mandataire: Stalla-Bourdillon, Bernard

(56) Documents cités:
- EP-A- 0 097 090
- EP-A- 0 108 002
- DE-A- 2 717 753
- DE-C- 100 133
- FR-A- 437 621
- NL-A- 8 300 121
- US-A- 3 578 503
- US-A- 4 127 701
- US-A- 4 198 475
- US-A- 4 218 520
- US-A- 4 421 830
- DERWENT JAPANESE PATENTS REPORT, vol. T, no. 30, résumé no. 48855, 29 août 1972; & JP-A-72 28 137 (SONY CORP.) 26-07-1972

## Description

La présente invention concerne la conception des générateurs électrochimiques ainsi que celle des équipements qui leur sont associés dans des dispositifs permettant de produire de l'énergie par conversion électrique entre deux systèmes d'électrodes en contact avec un électrolyte, plus particulièrement dans le cas où l'un des systèmes au moins comporte une matière active consommable.

Un certain nombre de générateurs électrochimiques se caractérisent par l'utilisation d'électrodes qui sont, soit régénérables électriquement (par exemple, électrode positive à base d'hydroxyde de nickel), soit constamment opérationnelles sans recharge lorsqu'il s'agit d'électrodes à air où la production de courant est due à la réduction de l'oxygène sur une électrode de conception analogue à celles utilisées dans les piles à combustibles.

En revanche, d'autres électrodes à matière active consommable, comme les électrodes négatives à base de métaux tels que l'aluminium, ne peuvent être régénérées in situ, d'où il résulte que, dans de tels systèmes, les électrodes métalliques négatives doivent être remplacées périodiquement.

L'intérêt que présente notamment l'aluminium dans les générateurs électrochimiques peut être précisé en prenant comme exemple le cas du couple aluminium/air, bien que les cas d'application de l'invention ne soient pas limités à ce couple particulier. La réaction globale réalisée au sein du générateur est alors :

Aℓ +3/2 H₂O + 3/4 O₂ + KOH → KAℓ (OH)₄.

Compte tenu du potentiel fortement négatif que présente l'aluminium, instable en milieu aqueux, son emploi permet d'obtenir des tensions aux bornes d'un élément aluminium/air de l'ordre de 1,50 V pour des densités de courant voisines de 200 mA/cm² et, pour l'énergie massique, des valeurs pratiques supérieures à 300 Wh/kg pour des durées de décharge importantes, de l'ordre de 100 heures.

Toutefois, dans les réalisations telles que celles relatives notamment aux générateurs Zn-air et Al-air, les électrodes métalliques sont traditionnellement constituées par une matière active sous forme de plaques. Il convient donc périodiquement de démonter les anciennes plaques qui ont été en grande partie dissoutes lors de l'opération de décharge et de les remplacer par des neuves. Cette opération implique des manipulations qui présentent de nombreux inconvénients. De plus, quand on utilise des électrodes en métal massif mises en place pour une durée importante, il se manifeste des phénomènes de corrosion et de déformation, qui sont préjudiciables à l'efficacité et à la longévité des électrodes de polarité opposée, qui conduisent à un rendement médiocre du générateur, et qui rendent difficile la mise en puissance du générateur après une période de repos.

En pratique, si l'on peut accepter de consommer sans régénération l'aluminium, qui a l'avantage d'être un métal bon marché, on ne peut cependant pas se permettre d'accepter de jeter après usage le générateur complet, alors même que la fabrication industrielle de plaques d'électrodes en aluminium, la mise en place de telles plaques dans un générateur, leur échange, la collecte et le retraitement des déchets (constitués par une solution aqueuse de potasse chargée d'aluminates de grande solubilité), posent des problèmes économiques difficilement surmontables.

Pour pallier cet inconvénient, on a déjà proposé, conformément notamment à la demande de brevet français n° 2 602 095, un dispositif de conversion électrochimique comportant deux systèmes d'électrodes en contact avec un électrolyte, où l'un des systèmes d'électrodes est constitué par des billes comportant de l'aluminium comme matière active, le dispositif comportant des moyens de mise en circulation d'un mélange d'électrolyte avec lesdites billes, en boucle fermée, à travers un générateur électrochimique contenant le second système d'électrodes, ainsi que des moyens d'évacuation des billes consommées et des moyens d'introduction de billes neuves dans l'électrolyte, en compensation.

L'emploi de l'aluminium sous forme de billes comme matière active permet de réaliser des générateurs électrochimiques de plus faible coût et de plus longue durée de vie, en s'affranchissant des problèmes que posait la corrosion. Toutefois, on se heurte à des problèmes technologiques posés par la circulation d'un mélange biphasique et les opérations de réglage de la quantité de billes en circulation ou de la quantité de billes neuves introduites sont moins faciles à résoudre qu'il n'y paraît. C'est pourquoi la société déposante a recherché une solution plus simple et plus économique pour recharger une électrode en billes de matière active. A cet effet, il est proposé, selon l'invention, que cette recharge s'effectue mécaniquement, avantageusement par pression ou gravité, en combinaison avec l'emploi d'une armature centrale collectrice réalisée sous forme de structure alvéolaire de façon à permettre une bonne répartition des billes de matière active dans la partie active du générateur.

De la sorte, l'invention permet de tirer pleinement profit des atouts que présentent, dans le domaine des générateurs électrochimiques, les électrodes consommables sous forme de billes à base de métaux tels que l'aluminium, et ce mieux que d'autres conceptions de l'art antérieur qui utilisaient déjà des moyens mécaniques pour faire avancer des billes de matière active dans une électrode, comme dans le brevet américain 4 198 475 ou le brevet allemand 27 17 753.

Ainsi le brevet américain US-A-4 198 475 propose un générateur électrochimique rechargeable. Un piston permet de maintenir une pression sur les billes de matière active plongées dans un bain d'électrolyte au sein de l'électrode. Ce piston par pivotement permet également la recharge de l'électrode en bille de matière active à partir d'un réservoir dont l'ouverture est à la commande.

Le brevet allemand DE-A-2 717 753 propose un système distributeur rotatif qui dose la quantité de billes introduites dans l'électrode à partir d'un réservoir.

Dans ces deux cas, les billes de matière active sont en vrac au sein de l'électrode.
le brevet japonais JP-A-7 228 137 propose quant à lui d'interposer dans un courant d'électrolyte entraînant des billes de matière active, un tissé ou une mousse, de sorte à intercepter ces billes qui, une fois consommées par la réaction, se libèrent du tissé ou de la mousse.

La présente invention a donc pour objet un dispositif de conversion électrochimique comprenant des systèmes d'électrodes de polarités opposées en contact avec un électrolyte, dans lequel l'un au moins desdits systèmes d'électrode comporte une électrode à matière active sous forme de particules consommables, et des moyens de recharge mécanique de ladite électrode à partir d'un réservoir de particules actives pour approvisionner l'électrode au fur et à mesure de la consommation desdites particules, caractérisé en ce que l'électrode à particules consommables comporte une structure de mousse électriquement conductrice constituant une armature collectrice alvéolaire qui reçoit lesdites particules dans ses pores et en ce que, pour régler la quantité de matière active par unité de surface d'électrode, ladite mousse est écrasée par endroit de manière à réaliser des bandes où la mousse est écrasée de sorte que les particules de matières actives ne peuvent pas y pénétrer, en alternance avec des bandes non écrasées situées en correspondance avec des orifices d'alimentation en particules neuves à partir dudit réservoir.

Selon une autre caractéristique de l'invention, cette électrode est en générale délimitée, autour de la mousse, par des parois poreuses qui, tout en livrant libre passage à l'électrolyte, ne se laissent pas traverser par les particules actives. On peut ainsi contribuer à ce que ces particules soient efficacement retenues au sein de la mousse qui, de préférence, remplit tout le volume compris entre deux plaques parallèles desdites parois. De telles parois peuvent avantageusement être réalisées en un matériau conducteur, qui se trouve aini en contact conducteur avec la mousse interne, et plus particulièrement en un métal choisi pour être non consommable dans la réaction électrolytique. Une fine porosité appropriée peut être obtenue notamment en utilisant pour cela un feutre métallique, par exemple à revêtement de cadmium.

Il est remarquable qu'une armature collectrice alvéolaire convenant à la mise en oeuvre de l'invention se trouve aisément dans le commerce, parmi les mousses métalliques dites à pores ouverts. Ces mousses, disponibles sous des porosités supérieures à 96 %, introduisent un grand volume disponible et une excellente conductibilité pour une faible quantité de matière. De plus, de par leur structure à pores ouverts et leur technique de fabrication par dépôt métallique sur une mousse organique qui est en général éliminée ensuite par combustion, elles présentent des propriétés qui sont tout-à-fait appropriées dans le cadre de l'invention, pour faciliter non seulement la collecte des charges électriques, mais également un tassement permanent des particules, au fur et à mesure que leur consommation réduit leur taille, de telle sorte que l'électrode reste constamment remplie au mieux et de manière homogène, du moins dans toute sa partie active qui baigne dans l'électrolyte, ce dernier étant de préférence immobile.

Pour un fonctionnement optimal selon ce processus, les particules électrochimiquement actives sont avantageusement conformées de manière à favoriser leur coulabilité, sans le besoin d'être dispersées dans un liquide. Il s'agit alors de particules de particules sphériques ou cylindriques ou sensiblement telles, de dimensions inférieures à 5 mm, généralement comprises entre 0,1 et 3 mm, notamment de l'ordre de 1 mm. En pratique, quelle que soit la forme de ces particules, il est surtout utile qu'elles forment une masse s'écoulant facilement, ce qui ne serait pas le cas de formes aciculaire ou dendritique. On choisira donc de préférence des particules de forme individuelle régulière, avec une dimension maximale de 1 à 2 fois la dimension minimale, et plus particulièrement des particules en forme de billes sphériques de diamètre compris entre 0,5 et 1,5 mm.

Une structure alvéolaire appropriée dans ces conditions pour constituer l'armature collectrice est une mousse métallique à pores ouverts dont le diamètre moyen des alvéoles (ou pores) est bien supérieur à celui des particules devant la remplir, notamment compris entre 2 et 6 fois la dimension maximale des particules neuves. Elle est donc par exemple telle que l'ouverture des alvéoles soit en moyenne sensiblement trois fois plus grande que le diamètre de billes sphériques utilisées comme matière active, ce qui conduit avantageusement à des dimensions de pores de l'ordre de 0,5 à 3 mm.

Les particules actives sont avantageusement, au moins en surface et de préférence également dans leur masse, constituées en un métal oxydable électrochimiquement, l'espèce oxydée pouvant se dissoudre dans l'électrolyte utilisé dans le générateur. Le métal peut être pur ou sous forme d'alliage. A titre d'exemple, on peut citer, comme métal constitutif de ces particules, l'aluminium ou le zinc, l'électrolyte mis en oeuvre étant alors généralement une base forte ou un électrolyte salin.

Dans un mode de réalisation préféré d'un générateur électrochimique construit selon l'invention, celui-ci comporte une cuve contenant des électrodes parallèles de polarités alternativement opposées, qui est intégrée avec un ou des réservoirs de particules neuves pour le rechargement des électrodes à particules consommables, séparé(s) de la cuve par des moyens oburateurs qui permettent périodiquement l'alimentation sélective de leurs armatures collectrices alvéolaires en particules neuves. On peut utiliser notamment à cet effet des organes obturateurs mécaniques du type boisseau ou glissière, qui peuvent être communs à plusieurs électrodes, reliées soit à un réservoir unique, soit plutôt à des réservoirs individuellement associés.

En fonctionnement, les électrodes baignent dans un électrolyte qui remplit la cuve, sans pénétrer dans le réservoir. A cet effet, il suffit de n'ouvrir l'obturateur que quand le générateur est en position verticale, cuve en bas. On peut avantageusement prévoir, par ailleurs, que les armatures alvéolaires des électrodes consommables dépassent de la cuve dans une partie basse d'un carter enveloppant le ou les réservoirs, entre la cuve elle-même et les moyens obturateurs de connexion au réservoir. On ménage aini un volume de garde hors de l'électrolyte, où une fraction de l'armature alvéolaire en aval des moyens obturateurs se trouve réservée à la distribution progressive des particules au sein de cette armature, en amont de sa partie active. Ceci permet d'assurer un bon remplissage dans toute la partie active et d'obtenir une densité uniforme de la matière active sur toute la surface d'électrode baignant dans l'électrolyte.

Il est, selon l'invention, intérêt de permettre facilement un réglage de la quantité de matière active par unité de surface d'électrode. Il suffit à cet effet d'écraser la mousse par endroits pour que les particules de matière active ne puissent plus y pénétrer. On peut ainsi, par exemple, créer à travers une électrode de grande surface, des bandes écrasées alternant avec des bandes non écrasées en correspondance avec des orifices d'alimentation à partir du réservoir de particules neuves.

On décrira maintenant plus en détail le principe qui est à la base de l'invention, en liaison avec des modes de réalisation particuliers d'un générateur conforme à celle-ci, illustrés par les dessins annexés dans lesquels :
- La figure 1 représente une vue en coupe transversale d'un dispositif selon l'invention
- La figure 2 représente une vue en perspective cavalière d'une variante de construction de ce dispositif.

Le métal constituant l'électrode que l'on entend régénérer mécaniquement, et non électriquement in situ, selon l'invention, se présente sous la forme de granules si possible sphériques, ou se rapprochant de la forme d'un cylindre ou d'une sphère. Ces particules sont plus particulièrement des billes qui ont un diamètre se situant dans la plage précitée. Dans le cas particulier considéré, on utilise des billes shériques constituées dans leur masse d'aluminium, métal qui n'est régénérable électriquement. Mais le même dispositif peut être utilisé avec des particules de zinc.

A chaque élément constitutif de l'accumulateur, est associé un réservoir dont le volume est tel que la masse de billes pouvant le remplir soit capable de fournir, par réaction électrochimique, la quantité d'électricité nécessaire à la durée maximale prévue pour son fonctionnement. Cette réserve de billes métalliques est séparée du coeur du générateur occupé par l'électrolyte et les électrodes par un dispositif d'obturation qui empêche, entre autres, l'électrolyte de mouiller par capillarité les billes contenues dans le réservoir.

Dans le coeur du générateur, l'électrode où seront consommées les billes est délimitée par une enveloppe constituées de parois réalisées en un matériau poreux ou fibreux, de préférence sous la forme d'un feutre métallique revêtu de cadmium, possédant des interstices ou pores d'un diamètre très inférieur à celui des billes. Dans l'enveloppe de feutre métallique s'engage une armature métallique alvéolaire inaltérable dans le milieu électrolytique employé et dans le domaine de potentiel dans lequel est située cette électrode. Cette armature métallique alvéolaire constitue le collecteur de l'électrode, qui est connecté au circuit extérieur de collecte des charges. Cette armature est réalisée de manière préférentielle sous la forme d'une mousse métallique cadmiée à pores ouverts.

Dans la pratique, plusieurs géométries pour cette électrode peuvent être retenues et l'armature collectrice peut avoir des formes diverses. A titre d'exemple non limitatif, l'enveloppe peut avoir une forme parallélépipédique, son épaisseur étant comprise entre 1 et 10 mm et, par exemple, de l'ordre de 2,5 mm.

L'armature métallique alvéolaire peut être avantageusement constituée par une structure métallique alvéolaire isotrope et ouverte, le diamètre moyen des alvéoles étant bien supérieur à celui des billes devant les remplir. Une telle structure assure une collecte aisée des charges entre les billes et l'armature collectrice, et notamment une bonne répartition des billes par gravité au sein de la structure.

Les parois poreuses sont faites d'un matériau électriquement conducteur, tel que, par exemple, un feutre métallique de faible épaisseur, mais de texture très serrée. Ce matériau offre l'avantage d'éviter le passage de particules métalliques de très petit diamètre à travers les parois, ces particules étant totalement oxydées lors de leur passage éventuel dans le feutre métallique. Un séparateur ou espaceur isolant électriquement l'électrode à billes de l'électrode de polarité opposée qui lui est associée.

Lors du fonctionnement de cette électrode a billes, l'obturateur isole le coeur du générateur du réservoir de billes. La dissolution anodique du métal va provoquer après un certain temps une diminution du volume de billes par réduction de leur taille. Afin que la partie active de l'électrode soit toujours approvisionnée, on ménage un volume dit "de garde" dans la partie haute de l'électrode, volume qui, par descente des billes par gravité va compenser progressivement la déperdition volumique dans la partie active de l'électrode. Lorsque le volume de garde est presque épuisé, l'obturateur est ouvert et la réserve de billes est mise ainsi en liaison avec l'électrode-pochette. Les billes descendent alors dans le volume à combler, puis l'obturateur est de nouveau fermé. La commande d'ouverture de l'obturateur peut être programmée en se basant sur la consommation maximale de billes pendant une durée déterminée, consommation elle-même fixée par le courant maximal pouvant être fourni par l'électrode. Cette commande peut également être déclenchée par une jauge détectant le non-remplissage par les billes du volume de garde.

Afin de faciliter la descente des billes du réservoir dans la structure pochette et le bon remplissage de celle-ci, on pourra éventuellement recourir aux moyens suivants pris séparément ou combinés :
- Vibration périodique de l'ensemble, notamment lors de l'ouverture de l'obturateur ;
- Pression de tassement exercée périodiquement, notamment lors de l'ouverture de l'obturateur, par un piston agissant sur la surface supérieure des billes contenues dans le réservoir ;
- Pression de tassement exercée en continu par une masse, par exemple métallique, en appui supérieur sur les billes.

Concernant l'obturateur, celui-ci pourra être réalisé par divers moyens connus de la technique, une des propriétés requises étant qu'il ne devra pas être détérioré par les billes et qu'il devra assurer une bonne fermeture en évitant tout coincement par celles-ci. Des systèmes à barillet ou à glissière pourront par exemple être utilisés. Par ailleurs, afin de limiter le mouillage par montée capillaire, l'obturateur pourra, par exemple, être réalisé en un matériau hydrophobe.

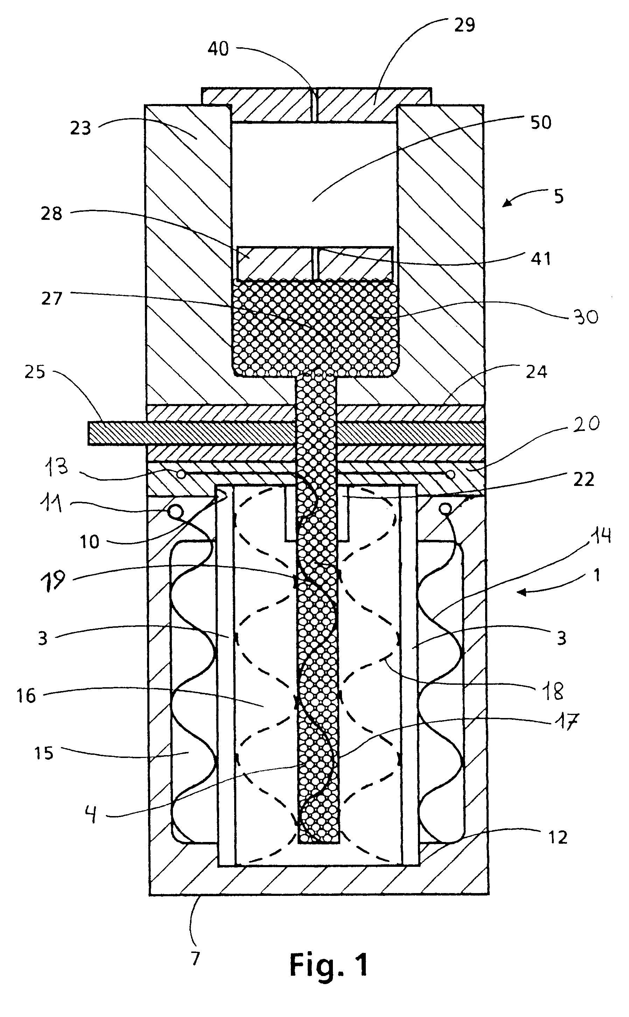

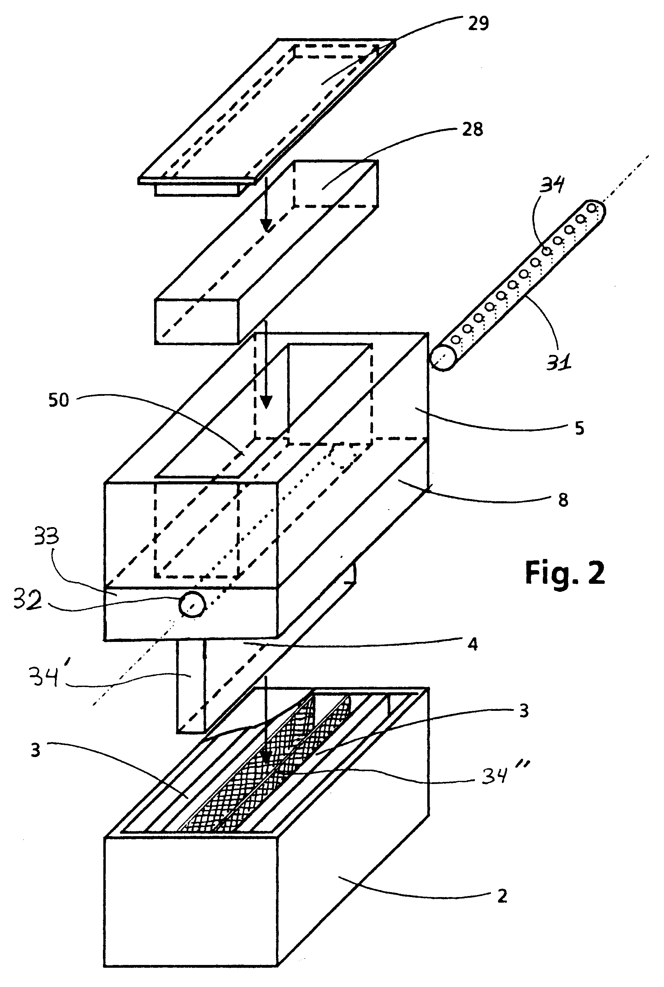

Le dispositif représenté sur les figures 1 et 2 comprend un générateur électrochimique 1, constitué par une cuve électrolytique 2 dans laquelle sont disposés des systèmes d'électrodes parallèles. Par souci de simplification, on a représenté un générateur comportant seulement trois électrodes, à savoir deux électrodes réductrices d'oxygène, plus particulièrement des électrodes à air 3 (électrodes positives), et un système d'électrode à matière active consommable 4 constituant entre elles un électrode négative. La matière active est formée de billes d'aluminium 30, accumulées selon l'axe de la cuve 2, et cette électrode est rechargeable mécaniquement en billes neuves grâce à un système de recharge 5.

La cuve 2 est par exemple parallélépipédique. Elle est fermée par un fond 7 et par une paroi supérieure formé par un couvercle 20 comportant une ouverture centrale perpendiculaire au plan de la figure au-dessus de l'électrode négative. Au voisinage de ladite ouverture, la paroi supérieure présente un épaulement interne 10, formant un logement dans lequel s'appuient les extrémités supérieures des électrodes à air 3. De même, le fond 7 de la cuve 2 comporte un logement central 12, où les électrodes à air 3 sont en appui par leurs extrémités inférieures contre le fond 7, à la fois longitudinalement et latéralement.

Les électrodes à air 3 du générateur 1 sont du type classique à triple contact. Elles sont exposées à l'air 15 sur leur face externe et leur face interne est en contact avec l'électrolyte 16. Elles peuvent également être alimentées en air enrichi en oxygène et constituer des électrodes à oxygène. A chaque extrêmité de la cuve sont réalisés des orifices d'alimentation en air, non représentés. Entre la face externe des électrodes 3 et la paroi de la cuve 2, est disposé un collecteur de courant positif 14, relié à un circuit de collecte des charges positives 11.

Les billes 30 sont constituées d'aluminium ultra pur et elles ont un diamètre de 0,3 mm. Ces billes 4 sont réparties au sein d'une armature métallique alvéolaire 19, à l'intérieur d'une enveloppe axiale 17, disposée perpendiculairement au plan de la figure dans la zone médiane de la cuve, entre les électrodes à air. L'armature est faite d'une plaque de mousse de nickel à grande porosité de type ouvert, ayant des alvéoles ou pores de dimensions moyennes 0,8 mm. L'enveloppe 17 présente une épaisseur de l'ordre de 2,5 mm contenant la mousse. Ses parois sont constituées par un feutre de nickel de 0,15 mm d'épaisseur. Un espaceur isolant 18 est disposé entre l'enveloppe 17 et la face interne des électrodes à air 3. L'armature 19 est reliée à un circuit 13 de collecte des charges négatives, intégré dans une plaque 20 fixée en couvercle sur la paroi supérieure de la cuve 2. Cette plaque 20 comporte une ouverture centrale se situant dans le prolongement de l'enveloppe 17.

Dans sa partie supérieure, l'enveloppe 17 est séparée de l'électrolyte 16 par une gaine 22, fixée sous la plaque 20, autour de l'ouverture centrale et présentant une hauteur de 3 cm environ. On constitue ainsi le volume de garde ci-dessus décrit. La gaine 22 peut être réalisée en matière plastique d'une seule pièce avec la plaque 20.

Le système de recharge 5 permettant l'approvisionnement en billes 30 est constitué par un réservoir 23 dont le fond 24 repose sur la plaque 20, dont il est rendu solidaire. Le réservoir 23 est délimité par des parois s'évasant vers le haut et il se termine à travers le fond 24 par une ouverture 27 de communication avec la cuve 1, qui est située en correspondance avec celle du couvercle de la cuve et qui qui peut être fermée par interpositon d'un obturateur mobile 25, réalisé en polytétrafluoréthylène.

L'obturateur 25 est constitué par une glissière qui présente une ouverture identique aux précédentes. Sa translation parallèlement au plan de la figure permet d'assurer la mise en communication du fond du réservoir 23 avec l'intérieur de l'enveloppe 17 de l'électrode négative quand cell-ci doit être rechargée, soit de l'en isoler le reste du temps.

Les billes de réserve 30 contenues dans le réservoir 23 sont poussées de façon continue par une masse d'acier 28, coulissant dans le volume interne 50 du réservoir 23, dont la structure favorise la descente des billes par gravité. La masse 28 assure une pression de l'ordre de 157 Pa (16 g/cm2) dans un exemple concret particulier de réalisation.

Le réservoir 23 est fermé par un capuchon 29 que l'on peut retirer chaque fois que le réservoir 23 est vide, afin de remplir celui-ci à nouveau. Le capuchon 29 comme la masse 28 sont percés d'orifices 40-41 qui assurent un équilibrage de pression.

Dans un cas précis, la densité de courant à l'électrode étant de 150 mA/cm² par surface apparente de chaque face de l'électrode à billes 4, on provoque la mise en communication du réservoir 23 avec l'électrode toutes les deux heures, pendant une durée d'une minute. Ce système a fonctionné correctement pendant de nombreuses heures.

L'obturateur 25 peut présenter de nombreuses configuratons différentes. Dans le cas de la figure 1, il est perpendiculaire aux électrodes et l'obturation s'effectue par une translation, que l'obturateur comporte un orifice unique sous forme de fente ou une séries d'orifices alignés parallèlement aux électrodes. Mais on peut utiliser tout aussi bien des boisseaux rotatifs à fentes ou orifices.

Dans la configuration présentée sur la figure 2, un tel boisseau 31 est disposé longitudinalement parallèlement aux électrodes. Il est de forme cylindrique et comporte des ouvertures 34 qui le traversent. L'arrêt de l'alimentation en billes se fait dans ce cas par une rotation du boisseau dans un alésage 32 ménagé à travers un carter 33 fermant le réservoir de billes.

Par ailleurs ce carter 33 se prolonge au delà de l'obturateur et porte lui-même la mousse alvéolaire 34', qui s'inserre dans son enveloppe 34'' à l'intérieur de la cuve 2 quand il vient fermer cette dernière. Le volume de garde dont on a parlé ci-dessus est alors ménagé par la partie basse du carter autour de la mousse et hord de la cuve.

## Revendications

1. Dispositif de conversion électrochimique comprenant des systèmes d'électrodes de polarités opposées en contact avec un électrolyte, dans lequel l'un au moins desdits systèmes d'électrode comporte une électrode à matière active sous forme de particules consommables, et des moyens de recharge mécanique de ladite électrode à partir d'un réservoir de particules actives pour approvisionner l'électrode au fur et à mesure de la consommation desdites particules, caractérisé en ce que l'électrode à particules consommables comporte une structure de mousse électriquement conductrice constituant une armature collectrice alvéolaire qui reçoit lesdites particules dans ses pores et en ce que, pour régler la quantité de matière active par unité de surface d'électrode, ladite mousse est écrasée par endroit de manière à réaliser des bandes où la mousse est écrasée de sorte que les particules de matières actives ne peuvent pas y pénétrer, en alternance avec des bandes non écrasées situées en correspondance avec des orifices d'alimentation en particules neuves à partir dudit réservoir.

2. Dispositif suivant la revendication 1, caractérisé en ce que ladite armature alvéolaire est contenue dans une enveloppe à parois (17) constituées d'un feutre métallique.

3. Dispositif selon les revendications 1 ou 2, caractérisé en ce que la structure métallique alvéolaire est constituée d'une mousse métallique à pores ouverts en métal cadmié dont le diamètre moyen des alvéoles est bien supérieur à celui de billes constituant lesdites particules.

4. Dispositif selon la revendication 3, caractérisé en ce que la mousse présente une dimension de pores sensiblement trois fois plus grande que le diamètre des billes de matière active.

5. Dispositif selon l'une quelconque des revendications 1 à 4, caractérisé en ce que les particules électrochimiquement actives sont sensiblement chacune totalement consommables et en ce qu'elles présentent des dimensions inférieures à 5 mm, généralement comprises entre 0,1 et 3 mm, propres à former une masse s'écoulant facilement.

6. Dispositif selon l'une quelconque des revendications 1 à 5, caractérisé par le fait que les particules électrochimiquement actives sont constituées dans la masse d'un métal oxydable électrochimiquement, l'expèce oxydée pouvant se dissoudre dans l'électrolyte (16), ledit métal étant notamment l'aluminium ou le zinc.

7. Dispositif selon l'une des revendications 1 à 6, caractérisé par le fait qu'il est ménagé un volume de garde de billes de réserve dans une fraction de ladite armature non en contact avec l'électrolyte.

8. Dispositif selon l'une des revendications 1 à 7, caractérisé par le fait qu'il comporte un organe obturateur (25) pour périodiquement isoler ou mettre en communication de l'armature métallique alvéolaire (17) avec le réservoir (23) de particules (4) devant alimenter celle-ci.

9. Dispositif selon la revendication 8, caractérisé par le fait que ledit obturateur est un dispositif mécanique du type boisseau ou glissière, notamment en un matériau hydrophobe.

10. Dispositif selon l'une des revendications 1 à 9, caractérisé par le fait que ledit réservoir est associé à une masse de poussée (28) favorisant la descente des particules de réserve par gravité.

11. Dispositif selon l'une quelconque des revendications 1 à 10, caractérisé par le fait que le second système d'électrodes (3) est constitué essentiellement par des électrodes réductrices d'oxygène.

## Claims

1. An electrochemical conversion device, comprising systems of electrodes of opposite polarity in contact with an electrolyte, wherein at least one of the said electrode systems comprises an electrode of active material in the form of consumable particles, and means for mechanically reloading said electrode from an active particle reservoir in order to supply the electrode at the rate of consumption of the particles, characterised in that the consumable-particle electrode comprises an electrically conductive sponge structure constituting a cellular collecting skeleton which receives the said particles in its pores and in that in order to control the quality of active material per electrode unit area, said sponge is locally crushed to form strips in which the sponge is so crushed that the particles of active material cannot penetrate therein, alternating with non-crushed strips situated in register with supply apertures for new particles from said reservoir.

2. A device according to claim 1, characterised in that the said cellular skeleton is contained in a casing having walls (17) formed from a metal felt.

3. A device according to claim 1 or 2, characterised in that the cellular metal structure is formed by a metal sponge having open pores and made of cadmium-plated metal, the mean diameter of the cells being much larger than that of the balls forming the said particles.

4. A device according to claim 3, characterised in that the sponge has a pore dimension substantially three times greater than the diameter of the active-material balls.

5. A device according to any one of claims 1 to 4, characterised in that the electrochemically active particles are substantially each totally consumable and in that they have dimensions less than 5 mm, generally between 0.1 and 3 mm, adapted to form a readily flowing mass.

6. A device according to any one of claims 1 to 5, characterised in that the electrochemically active particles are constituted throughout by an electrochemically oxidisable metal, the oxidised type being capable of dissolving in the electrolyte (16), the said metal being more particularly aluminium or zinc.

7. A device according to any one of claims 1 to 6, characterised in that a storage space for reserve balls is formed in a fraction of the said skeleton not in contact with the electrolyte.

8. A device according to any one of claims 1 to 7, characterised in that it comprises a closure means (25) for periodically isolating the cellular metal skeleton (17) from, or bringing it into communication with, the reservoir (23) of particles (4) intended to supply said skeleton.

9. A device according to claim 8, characterised in that said closure device is a mechanical device of the plug or slide type, more particularly made of a hydrophobic material.

10. A device according to any one of claims 1 to 9, characterised in that the said reservoir is associated with a thrust means (28) adapted to promote the descent of the reserve particles by gravity.

11. A device according to any one of claims 1 to 10, characterised in that the second electrode system (3) consists essentially of oxygen reducing electrodes.

## Patentansprüche

1. Vorrichtung für eine elektrochemische Umwandlung mit Elektrodensystemen von entgegengesetzter Polarität, die mit einem Elektrolyt in Kontakt stehen, bei welcher Vorrichtung wenigstens eines der genannten Elektrodensysteme eine Elektrode mit aktiver Masse in Form von verbrauchbaren Partikeln und Mittel zur mechanischen Wiederherstellung der genannten Elektrode aus einem Vorrat von aktiven Partikeln zur Auffüllung der Elektrode je nach Verbrauch der genannten Partikel besitzt,
dadurch gekennzeichnet, daß die Elektrode mit den verbrauchbaren Partikeln eine elektrisch leitfähige Schaumstruktur besitzt, die einen aufnahmefähigen zellenförmigen Porenaufbau bildet, der die genannten Partikel in seinen Poren in Empfang nimmt, und bei dem, um die Menge der aktiven Masse pro Einheit der Elektrodenoberfläche einzustellen, die genannte Schaumstruktur stellenweise zu dichten Schichten zusammengedrückt ist, wobei der Schaum derartig zusammengedrückt ist, daß die Partikel der aktiven Masse dort nicht eindringen können, im Gegensatz zu den nicht zusammengedrückten Bereichen, die in Übereinstimmung mit den Zuführungsöffnungen für die neuen Partikel aus dem Reservoir angeordnet sind.

2. Vorrichtung nach Anspruch 1, dadurch gekennzeichnet, daß der zellenförmige Porenaufbau sich in einer Ummantelung (17) befindet, die aus einem Metallvlies besteht.

3. Vorrrichtung nach den Ansprüchen 1 oder 2, dadurch gekennzeichnet, daß die zellenförmige metallische Porenstruktur aus einem offenporigen Metallschaum aus kadmiertem Metall besteht, wobei der mittlere Durchmesser der Poren erheblich über dem der Kügelchen liegt, die die Partikel bilden.

4. Vorrichtung nach Anspruch 3, dadurch gekennzeichnet, daß der Schaum eine Porengröße besitzt, die wesentlich größer ist als das Dreifache des Durchmessers der Kügelchen der aktiven Masse.

5. Vorrichtung nach einem der Ansprüche 1 - 4, dadurch gekennzeichnet, daß jedes der elektrochemisch aktiven Partikel im wesentlichen vollständig verbrauchbar ist und daß sie kleiner als 5 mm sind, vorzugsweise zwischen 0,1 und 3 mm, damit sie eine leicht fließende Masse bilden.

6. Vorrichtung nach einem der Ansprüche 1 - 5, dadurch gekennzeichnet, daß die elektrochemisch aktiven Partikel aus einer elektrochemisch oxidierbaren Metallmasse bestehen, bei der sich das oxidierte Metall im Elektrolyt (16) auflösen kann, wobei das Metall vorzugsweise Aluminium oder Zink ist.

7. Vorrichtung nach einem der Ansprüche 1 - 6, dadurch gekennzeichnet, daß in einem Teil der Struktur, der nicht in Kontakt mit dem Elektrolyt ist, ein Vorratsvolumen für Reservekügelchen angeordnet ist.

8. Vorrichtung nach einem der Ansprüche 1 - 7, dadurch gekennzeichnet, daß sie ein Verschlußorgan (25) besitzt, das periodisch den zellenförmigen Porenaufbau (17) von dem Reservoir (23) von Partikeln (24) trennt oder mit diesem zur Auffüllung mit Partikeln verbindet.

9. Vorrichtung nach Anspruch 8, dadurch gekennzeichnet, daß das Verschlußorgan eine mechanische Vorrichtung in Form einer Kappe oder eines Schiebedeckels ist, die vorzugsweise aus wasserabstoßendem Material bestehen.

10. Vorrichtung nach einem der Ansprüche 1 - 9, dadurch gekennzeichnet, daß das Reservoir mit einer Druckmasse (28) ausgestattet ist, die das Abrutschen dein Reservepartikel durch Schwerkraft verbessert.

11. Vorrichtung nach einem der Ansprüche 1 - 10, dadurch gekennzeichnet, daß ein zweites Elektrodensystem (3) im wesentlichen aus sauerstoff-reduzierenden Elektroden gebildet ist.
